(19) Europäisches Patentamt
European Patent Office
Office européen des brevets

(11) **EP 3 419 213 B1**

(12) **EUROPEAN PATENT SPECIFICATION**

(45) Date of publication and mention
of the grant of the patent:
**11.03.2020 Bulletin 2020/11**

(51) Int Cl.:
**H04L 9/06** (2006.01)

(21) Application number: **17179048.8**

(22) Date of filing: **30.06.2017**

(54) **COMPUTER IMPLEMENTED METHOD, COMPUTER SYSTEM AND COMPUTER READABLE COMPUTER PROGRAM PRODUCT**

COMPUTERIMPLEMENTIERTES VERFAHREN, COMPUTERSYSTEM UND COMPUTERLESBARES COMPUTERPROGRAMMPRODUKT

PROCÉDÉ INFORMATIQUE, SYSTÈME INFORMATIQUE ET PRODUIT DE PROGRAMME INFORMATIQUE LISIBLE SUR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2017 EP 17177625**

(43) Date of publication of application:
**26.12.2018 Bulletin 2018/52**

(73) Proprietor: **Vestel Elektronik Sanayi ve Ticaret A.S.**
**45030 Manisa (TR)**

(72) Inventor: **PAMIR, Meksel Ugur**
**45030 Manisa (TR)**

(74) Representative: **Ascherl, Andreas et al**
**KEHL, ASCHERL, LIEBHOFF & ETTMAYR**
**Patentanwälte - Partnerschaft**
**Emil-Riedel-Strasse 18**
**80538 München (DE)**

(56) References cited:
EP-A2- 0 759 669      WO-A1-02/21760
WO-A1-2006/084375      US-A1- 2014 281 574

US-A1- 2015 082 054

- "Chapter 9: ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383 , 1 October 1996 (1996-10-01), XP001525009, ISBN: 978-0-8493-8523-0 Retrieved from the Internet: URL:http://www.cacr.math.uwaterloo.ca/hac/
- JIAN GUO ET AL: "The PHOTON Family of Lightweight Hash Functions", 14 August 2011 (2011-08-14), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 222 - 239, XP019161007, ISSN: 0302-9743 ISBN: 978-3-642-35622-3 * pages 230-232 *
- "Chapter 6: Stream Ciphers ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 191 - 222 , 1 October 1996 (1996-10-01), XP001525006, ISBN: 978-0-8493-8523-0 Retrieved from the Internet: URL:http://www.cacr.math.uwaterloo.ca/hac/

**Description**

**TECHNICAL FIELD**

The invention relates to a computer implemented method. Further, the invention relates to a computer system and a computer readable computer program product.

**BACKGROUND OF THE INVENTION**

Although applicable to any electronic system, the present invention will mainly be described in conjunction with electronic networks and sensitive data that must be protected in the electronic networks.

Sensitive data may be protected in various ways in computer networks. One possibility is to encrypt data prior to transmitting the data over the network. A possible implementation of such an encryption is the RSA algorithm. RSA is an asymmetric encryption algorithm that can be used both for encryption/decryption and for digital signatures. It uses key pairs consisting in a private key, which is used for decrypting or signing data, and a public key, which is used for encrypting and examining signatures. The private key is kept secret and can only be calculated from the public key with extremely high effort, if at all.

Keys and messages are represented as numbers and both the determination of the key pairs and the encryption/decryption or the signature of messages are mathematical operations. The fact that the private key is kept secret is based on the founded mathematical assumption that prime factorization is, as a rule, a difficult problem and that, in particular, the factorization of N in its prime factors P and Q is practically impossible.

Asymmetric cryptography deals with the concrete problem of how to safely exchange electronic messages and at the same time facilitate the exchange of keys and secrecy. In contrast to symmetric cryptography, when asymmetric cryptography is used, each user of the system only has to keep his own private key secret.

The asymmetric RSA algorithm is e.g. explained in the document EP1504337 (B1).

Another method to protect data is to use a symmetric encryption, like e.g. the DES or the AES algorithm. Symmetric encryption algorithms use the same cryptographic key for both encryption of plaintext and decryption of ciphertext. The key must therefore be known for encryption and decryption. The key may be called a "shared secret" between the parties that use the encryption.

There exist a variety of symmetric encryption algorithms that are computationally intensive. An exemplary list of such algorithms includes:

| Algorithm | **Required CPU cycle** | | | Rom |
|---|---|---|---|---|
| | Key | Input | 16 Byte Input | |
| DES-ECB | 19542 | 219 | 3108 | 9882 |
| TDES-ECB | 58629 | 200 | 9130 | 9882 |
| AES-256-ECB | 4131 | 316 | 2204 | 14108 |
| ARC4 | 0 | 6059 | 400 | 686 |
| **32 bit arm. | | | | |

The exemplary values for the needed computation cycles are provided for an ARM 32 bit processing core. Such relatively small processing cores are widely used in internet of things or IoT devices that are connected to a computer network.

Highly complex algorithms will therefore require a huge amount of processing cycles in such a processing core.

Accordingly, there is a need for an improved encryption method with reduced computational effort.

Document US 2015 / 082 054 A1 discloses a method for storing encrypted data, wherein a hash of the password is used as the password for encryption. Document US 2014 / 281 574 A1 discloses a multiring encryption method that performs encryption and decryption based on a hash of a password. Documents WO 2006/084 375 A1, WO 02 / 21 760 A1, and EP 0 759 669 A2 disclose generating an overflow by adding or subtracting a value, which corresponds to a module operation. "Chapter 9: ED - Menezes A. J.; J. Van Oorschot P.C.; Vanstone S.A." of the Handbook of applied cryptography discloses a modula operation as equivalent to an integer overflow, wherein output registers are initialized with a predetermined scheme. "The PHOTON Family of Lightweight Hash Functions" by Jian Guo et al. also discloses initializing output register. "Chapter 6: Stream Ciphers ED - Menezes A. J.; J. Van Oorschot P.C.; Vanstone S.A." of the Handbook of applied cryptography discloses the initialization, the element-wise combination and the handling of pointers in a loop.

## SUMMARY OF THE INVENTION

The present invention provides a computer implemented cryptographic method with the features of claim 1, a computer system with the features of claim 9 and a computer readable computer program product with the features of claim 10.

The present invention is based on the finding that known encryption algorithms are not adequate for low power processing devices, like e.g. IoT devices.

The present invention therefore provides a cryptographic method for encrypting and decrypting an input message based on a predefined password. For encryption and decryption, the cryptographic method makes use of integer overflows. While encrypting, the integer overflows randomize the content of the input message. During decryption, the same integer overflows allow reconstructing the original unencrypted input message.

It is understood that any type of hash algorithm may be used for calculating the hash value for the predefined password. Nevertheless, a specific hashing algorithm will be described below that requires very little computational effort.

The encryption and the decryption according to the present invention are reversible and are performed with the same hash. Therefore, a single method is disclosed that serves for encrypting an unencrypted input message and decrypting an encrypted input message. The encrypting and the decrypting only differ in a single step that will be described in details below.

As indicated above, possible applications of the present invention may be found in any system that requires encryption of data, like secure data transmissions, e.g. of sensor values in an IoT network.

Because of the reduced computational effort, the present invention may be especially beneficial for low power processors, like e.g. usually used in IoT devices.

Compared to the above mentioned algorithms, the algorithm according to the present invention (ReCoMe: Reversible Complexity Method) only requires a reduced amount of Rom and Ram memory. Further, the algorithm only requires 6300 cycles on the exemplary processing architecture for calculating the hash for the predefined password, 0 cycles on the input and 960 cycles to calculate an encrypted output message or decrypt an encrypted input message.

| Algorithm | **Required CPU cycles** | | | Rom |
|-----------|------|-------|---------------|-----|
| | Key | Input | 16 Byte Input | |
| ReCoMe | *6300 | 0 | 960 | 290 + *100 |

Further embodiments of the present invention are subject of the further subclaims and of the following description, referring to the drawings.

Determining the hash value for the predefined password may e.g. be performed with a two-step approach. The steps may comprise preloading at least one computation variable for the computation of the hash value based on a predefined arbitrary number, and calculating the hash value for the predefined password based on integer overflows caused by computations over the predefined password and the at least one preloaded computation variable.

The first step of the two-step approach is a kind of preparation phase. In this first step the computation variables that are later needed for computing the hash value are preloaded. Preloading refers to initializing the computation variables with values that may e.g. be based on a predefined arbitrary number. The predefined arbitrary number may e.g. be directly assigned to the respective computation variables or further computations may be performed based on the predefined arbitrary number, the results being assigned to the computation variables.

In the second step of the two-step approach, the actual computation of the hash value for the predefined password is performed. The hash value is calculated based on the predefined password and the preloaded computation variables. This step makes use of the fact that in processors integer overflows occur when an arithmetic operation attempts to create a numeric value that is outside of the range that can be represented with a given number of bits. Usually such a value will be larger than the maximum representable value. The resulting value may e.g. comprise only the part that fits into the respective variable. If for example a computation results in a 9-bit value only the lower eight bits may be stored in an 8-bit variable.

By using preloaded computation variables and deliberately causing integer overflows an irreversible complexation, i.e. hash value calculation, may be performed for the predefined password with only little computational effort.

In an embodiment, preloading may comprise initializing a first element of an output buffer for the hash value with the predefined arbitrary number and initializing the further elements of the output buffer based on the value of the first element of the output buffer and initializing a unique number variable with a unique number.

The first element of the output buffer will serve as a starting point, i.e. as the basis, for filling the output buffer with unique values. The output buffer may be chosen of any size as required by the respective application. It is understood, that the chances of producing identical hash values for different inputs is decreased by increasing the size of the output buffer. Therefore, the output buffer may e.g. be chosen to be more than 10, e.g. 15 or 20, elements long. It is understood, that after performing the computations the output buffer will hold the calculated hash value.

The unique number variable will serve as a kind of temporary variable in the second step of calculating the hash value.

In another embodiment, preloading may comprise initializing an input position pointer with half the size of the predefined password and initializing an output position pointer with half the size of the output buffer and initializing a loop counter with the summed value of the size of the predefined password and size of the output buffer multiplied by a multiplication factor.

For example the predefined password may be 100 elements long and the output buffer may be 20 elements long. The input position pointer will then be initialized with 100/2=50 and the output position pointer will be initialized with 20/2=10. If the result is a rational number, it may be rounded down.

Finally, the multiplication factor may e.g. be 5. Then the loop counter will be initialized with (100+20)*5=600. The loop counter will not use integer overflows and may be chosen with an accordingly large value range.

As already shown above, the loop counter may have the value of the sum of the predefined password size (InpSize) and the output buffer size (OutSize) multiplied by 5. However, the value of the multiplication factor may be modified. If the value is decreased, less CPU time will be spent but it will cause similar inputs to generate similar outputs or hash values. In the opposite case, it may be possible to generate an output that is less likely to coincide with another output or hash. However, the computation will require more CPU time.

In an embodiment, the predefined arbitrary number may be determined based on the predefined password.

If the predefined arbitrary number is determined based on the predefined password, different predefined passwords will provide different predefined arbitrary numbers. This will increase the security level of the algorithm.

The predefined arbitrary number may e.g. be calculated as a cross sum or simply a sum of the values in the predefined password.

In a further embodiment, preloading may comprise iterating over the output buffer starting with the second element of the output buffer and initializing in every iteration step the respective element of the output buffer based on the iteration step and the content of the element of the output buffer that is before the element of the output buffer treated in the respective iteration.

It is understood that for the first iteration step, the element of the prior iteration step is the first element of the output buffer.

The iterating and initializing may e.g. comprise assigning the respective element the value of the prior element plus the number of the iteration step. After this first calculation a factor may be added to the value of the respective element. The factor may be e.g. large enough to cause integer overflows for a plurality of elements.

If for example the predefined arbitrary number is 55, in the first iteration step, the second element of the output buffer will be initialized with 55+1 = 56. If the factor is e.g. 110, at the end of the iteration the second element of the output buffer will be loaded with the value 166.

In the second iteration step, the third element of the output buffer will be loaded with 166+2=168. Then 110 is added to 168, resulting in 110+168=278. The elements of the output buffer may e.g. be 8-bit variables that may only hold values between 0 and 255. Therefore, the first integer overflow is already caused in the second iteration step. The third element of the output buffer will therefore be loaded with 278-255=23.

It is understood that other values than 55 for the predefined arbitrary number and other values than 110 for the factor may be chosen according to specific application requirements.

In an embodiment, calculating may comprise performing calculations over the unique number variable and the predefined password and the output buffer with themselves in a loop that is repeated a number of times as indicated by the loop counter.

The loop is the main function of the computer implemented method and the actual calculation of the hash value is performed in the loop. After the loop finishes, the output buffer will hold the hash value. As explained above, the number of times that the loop is repeated may be tuned regarding the security level and the required computational effort.

In another embodiment, performing calculations may comprise assigning the unique number variable its value multiplied by the sum of the element of the predefined password at the position indicated by the input position pointer and the element of the output buffer at the position indicated by the output position pointer and assigning the unique number variable its value plus its value divided by 256.

The unique number variable may e.g. be named UniNum. The predefined password may be an array named Inp[]. The output buffer may be an array named Out[]. The input position pointer may be named InpPos and the output position pointer may be named OutPos.

In pseudo code, the above calculation may therefore be written as:

$$UniNum = UniNum * (Inp[InpPos] + Out[OutPos]);$$

$$UniNum = UniNum + (UniNum / 256);$$

In an embodiment, performing calculations may further comprise assigning the output buffer at the position indicated by the output position pointer the sum of its value and the unique number variable.

In pseudo code, the above calculation may therefore be written as:

$$Out[OutPos] = Out[OutPos] + UniNum;$$

In another embodiment, performing calculations may further comprise increasing the value of the input position pointer by one and increasing the value of the output position pointer by one.

In pseudo code, the above calculation may therefore be written as:

$$InpPos = InpPos + 1;$$

$$OutPos = OutPos + 1;$$

In an embodiment, performing calculations may further comprise comparing the value of the output position pointer with the size of the output buffer and setting the value of the output position pointer to zero if the value of the output position pointer is equal or larger than the size of the output buffer.

As indicated above, the output position pointer is not initialized with zero at the beginning of the loop. Therefore, the output position pointer is reset when it reaches the end of the output buffer and jumps back to the beginning of the output buffer.

In a further embodiment, performing calculations may further comprise comparing the value of the input position pointer with the size of the predefined password and setting the value of the input position pointer to zero if the value of the input position pointer is equal or larger than the size of the predefined password.

As indicated above, the input position pointer is not initialized with zero at the beginning of the loop. Therefore, the input position pointer is reset when it reaches the end of the predefined password and jumps back to the beginning of the predefined password.

While the above mainly referred to the efficient calculation of the hash value for the predetermined password that may be used as encryption or decryption key for encrypting or decrypting the input message, below the actual encryption or decryption will be described.

In an embodiment, encrypting or decrypting may comprise initializing a second input position pointer with zero and initializing a second output position pointer with zero and initializing a key position pointer with the size of the determined hash value for the predefined password, e.g. the size in bytes, e.g. 32 bytes for a 256 bit value.

While the above mentioned (first) input position pointer refers to the predetermined password, the second input position pointer refers to the input message that is to be en- or decrypted. The second input position pointer will be used in further computations to keep track of the element in the input message that has to be processed. The same applies to the second output position pointer that refers to the output message, while the first output position pointer refers to the output buffer for calculating the hash value for the predetermined password. The key position pointer refers to a position in the hash value for the predetermined password that is used as encryption key.

In another embodiment, encrypting or decrypting may further comprise performing calculations with single elements, e.g. single bytes, of the input message and single elements, e.g. single bytes, of the determined hash value in a loop that is repeated for every element of the input message and comprises incrementing by one the second input position pointer and the second output position pointer after performing the calculations in every loop cycle.

The input message and the output message will both comprise the same number of elements, e.g. character or byte elements. The above mentioned calculations may be performed element wise for the input message and the output message.

Since the method iterates element-wise over the input message and the output message, the second input position pointer and the second output position pointer may refer to the same variable that may be incremented by one every loop cycle.

In an embodiment, encrypting may comprise assigning an element of the output message that corresponds to the current loop cycle of the loop the sum of the corresponding element of the input and a corresponding element of the determined hash value that is indicated by the key position pointer, and adding a predefined element of the determined hash value to the respective element of the output message.

When encrypting the input message, every single element of the output message is assigned the respective element of the input message. Prior to this assignment, the respective element of the input message is modified by adding a specific one of the elements of the determined hash value to the element of the input message. This addition may cause an integer overflow, this means that the result may be smaller than the original value of the respective element of the input message. Further, a predefined element of the determined hash value is then added to the respective element of the output message.

The determination of the key position pointer will be described in further detail below.

With a 32 byte or 256 bit hash value, the predefined element of the determined hash may e.g. be the 25th element, i.e. byte, of the determined hash. It is however understood, that this number is just exemplarily chosen and that any other number may also be chosen.

In another embodiment, decrypting may comprise assigning an element of the output message that corresponds to the current loop cycle of the loop the difference of the corresponding element of the input message and the corresponding element of the determined hash value that is indicated by the key position pointer, and then subtracting the predefined element of the determined hash value from the respective element of the output message.

When decrypting the input message, every single element of the output message is assigned the respective element of the input message. Prior to this assignment, the respective element of the input message is modified by subtracting a specific one of the elements of the determined hash value from the element of the input message. This subtraction may cause an integer overflow, this means that the result may be larger than the original value of the respective element of the input message. Further, a predefined element of the determined hash value is subtracted from the respective element of the output message.

The determination of the key position pointer will be described in further detail below.

With a 32 byte or 256 bit hash value, the predefined element of the determined hash may e.g. be the 25th element of the determined hash. It is however understood, that this number is just exemplarily chosen and that any other number may also be chosen.

In an embodiment, in every loop cycle if the second input position pointer or the second output position pointer is equal or larger than the size of the input message the method may be terminated.

If the second input position pointer or the second output position pointer is equal to or larger than the size of the input message, the complete input message has been processed and the method may end.

In a further embodiment, in every loop cycle if the second input position pointer or the second output position pointer is smaller than the size of the input message, the key position pointer may be determined by incrementing the key position pointer by one and using the current key position pointer if the key position pointer is smaller than the number of elements of the hash value, e.g. in bytes.

If the hash value is e.g. a 32 byte or 256 bit hash value, it is verified if the key position pointer is equal to or larger than 32. If the key position pointer is smaller than this number, it may directly be used as pointer to the element of the determined hash value that must be used in the current loop cycle to perform the above mentioned calculations.

In an embodiment, if the key position pointer is equal to or larger than the number of elements of the hash value, e.g. in bytes, the key position pointer may be set to zero and the determined hash value may be modified by performing calculations over the determined hash value with itself.

After initialization and after every n-th run, n being the size of the determined hash value in bytes, e.g. 32, the determined hash value is further modified or obscured. This modification or obscuring is performed based on the determined hash value itself.

In another embodiment, performing calculations over the determined hash value with itself may comprise iterating over all elements of the determined hash value and adding at least one, especially two or three, elements of the determined hash value to the respective element of the determined hash value of the respective iteration.

As indicated above the method iterates over every element of the hash value and adds other elements of the hash value to the respective element. The summing operation may comprise at least one of the elements of the hash value but also two, three, four or more. In pseudo code this could read like:

$$\text{hash}[i] = \text{hash}[i] + \text{hash}[5] + \text{hash}[15] + \text{hash}[25]$$

It is understood, that the 5th, the 15th and the 25th element have only been exemplarily chosen and that any other combination and number of elements may be chosen. It is further understood, that this selection may be performed only once for the complete run of the method or may be performed individually every time the hash value is further modified or obscured. It is understood, that the same selections that are performed for encryption must also be performed for decryption.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1 shows a flow diagram of an embodiment of a method according to the present invention;

Fig. 2 shows a flow diagram of an embodiment of the step of preloading according to the present invention;

Fig. 3 shows a flow diagram of an embodiment of the step of calculating according to the present invention;

Fig. 4 shows a flow diagram of another embodiment of the method according to the present invention; and

Fig. 5 shows a block diagram of an embodiment of a computer system according to the present invention.

In the figures like reference signs denote like elements unless stated otherwise.

## DETAILED DESCRIPTION OF THE DRAWINGS

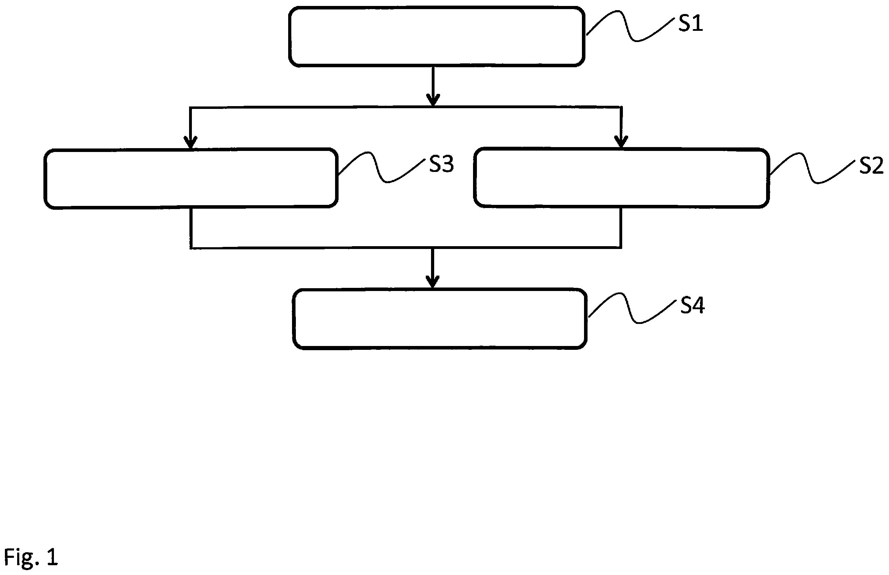

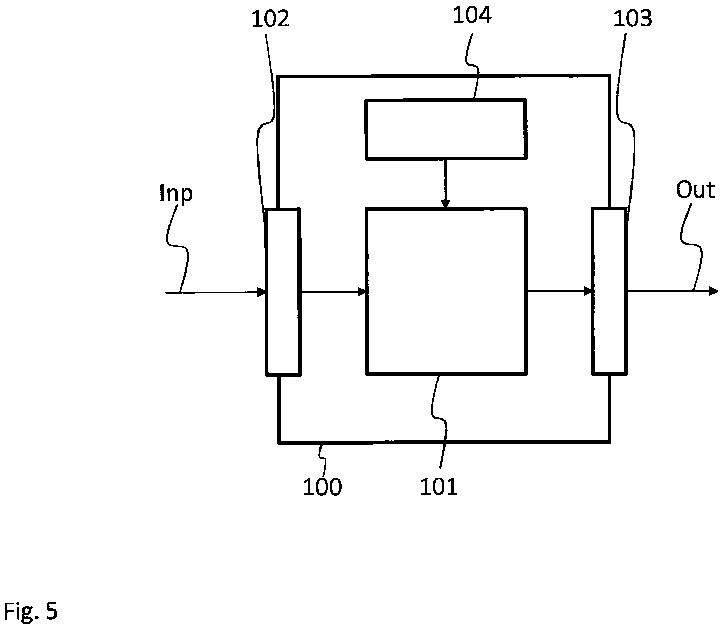

For ease of understanding the reference signs used in the description of the apparatus-based Fig. 5 will also be used in the description of the method based Figs. 1 - 4 and vice versa.

Fig. 1 shows a flow diagram of an embodiment of a computer implemented cryptographic method for encrypting and/or decrypting an input message _Inp in an electronic system 100 based on a predefined password Inp.

The method comprises determining S1 a hash value Key for the predefined password Inp based on a predefined hash algorithm. The method further comprises encrypting S2 or decrypting S3 the input message _Inp based on integer overflows caused by computations over the input message _Inp and the determined hash value Key, and providing S4 the encrypted or decrypted input message _Inp in an output message _Out.

The step S1 of determining a hash value may comprises preloading at least one computation variable Out, UniNum, InPos, OutPos, LoCo for the computation of the hash value based on a predefined arbitrary number. The computation variables Out, UniNum, InPos, OutPos, LoCo refer to variables that are used in the computer implemented method to perform internal or intermediate calculations on the way to compute the final result or output hash.

The output variable Out may e.g. be an array that holds the output, i.e. the hash value, after all computations are finished. The unique number variable UniNum may be an intermediate variable that holds a unique number. The input position pointer InPos may be a pointer to a specific field or element of the predefined password Inp. The output position pointer outPos may be a pointer to a specific field or element of the output buffer Out. Finally, the loop counter variable LoCo may define the number of time that the main loop is repeated.

The computer implemented method further comprises calculating the hash value for the predefined password Inp based on integer overflows caused by computations over the predefined password Inp and the at least one preloaded computation variable Out, UniNum, InPos, OutPos, LoCo.

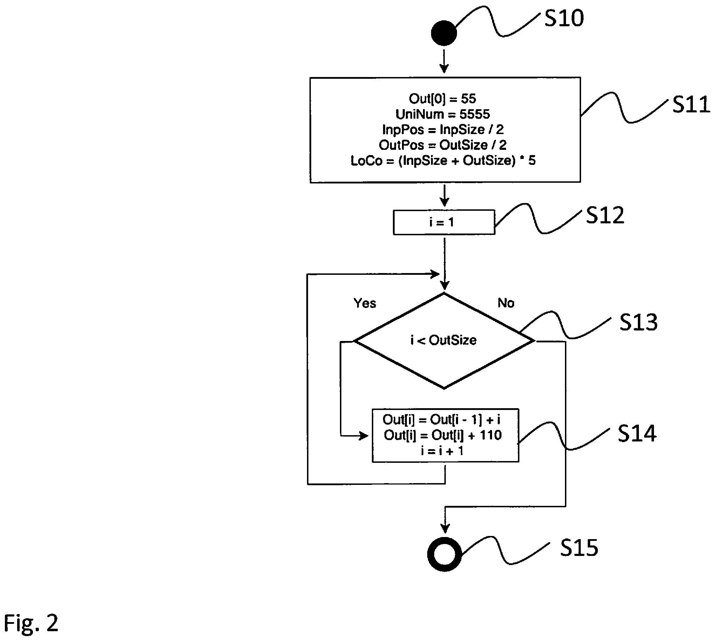

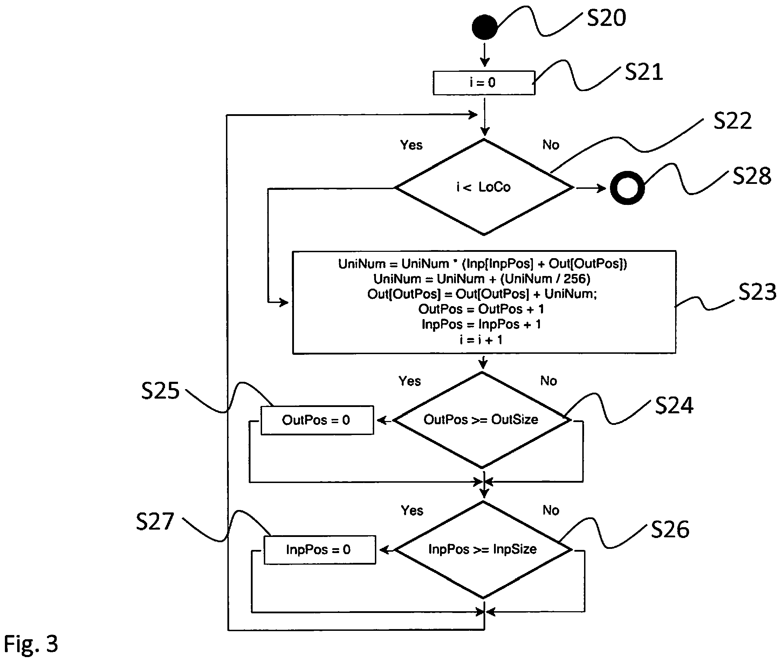

The details of the step of preloading and the step of calculating will be explained below with reference to Figs. 2 and 3.

Fig. 2 shows a flow diagram of the step of preloading S1. Preloading S1 starts at S10.

In step S11 a plurality of initializations are performed. For example, a first element of an output buffer Out for the hash value is initialized with the predefined arbitrary number, in this case 55. Further, a unique number variable UniNum is initialized with a unique number, in this case 5555. It is understood that the predefined arbitrary number and the unique number variable UniNum may be arbitrarily chosen and may be greater than zero.

In addition, an input position pointer InpPos is initialized with a value that is half the size of the predefined password Inp. The output position pointer OutPos is initialized with a value that is half the size of the output buffer Out. The loop counter LoCo is initialized with the summed value of the size of the predefined password Inp and size of the output buffer Out multiplied by a multiplication factor.

The above may be expressed in pseudo code as follows:

```
Out[0] = 55;
```

UniNum = 5555;

$$InpPos = InpSize / 2;$$

$$OutPos = OutSize / 2;$$

$$LoCo = (InpSize + OutSize) * 5;$$

In step S12, a temporary counter i is initialized with the value 1. In step S13 the method comprises verifying if i is smaller than the size of the output buffer OutSize. If i is smaller than the size of the output buffer OutSize, the element Out[i] of the output buffer Out is modified in step S14. Otherwise, the step S1 of preloading ends at S15.

The step S14 comprises iterating over the output buffer Out starting with the second element Out[1] of the output buffer Out and initializing in every iteration step the respective element Out[i] of the output buffer Out based on the iteration step i and the content of the element Out[i-1] of the output buffer Out that is before the element Out[i] of the output buffer Out treated in the respective iteration. This may e.g. include initializing Out[i] with the value of Out[i-1] + i and then adding a constant but arbitrarily chosen value, like e.g. 110 to Out[i]. After that i is incremented by one. After this has been performed for all elements of the output buffer Out, the method continues with step S2.

Fig. 3 shows a flow diagram of the step of calculating S2. Calculating starts at S20. In step S21 a temporary variable i is initialized with 0. In step S22 it is verified if i is smaller than the loop counter LoCo. If so, in step S23 various calculations are performed over the unique number variable UniNum, the predefined password Inp and the output buffer Out with themselves in a loop. The loop is repeated a number of times as indicated by the loop counter LoCo and i serves to count the loop iterations.

In step S23 the unique number variable UniNum is assigned with its value multiplied by the sum of the element Inp[InpPos] of the predefined password Inp at the position indicated by the input position pointer InpPos and the element Out[OutPos] of the output buffer Out at the position indicated by the output position pointer OutPos. After this, the unique number variable UniNum is assigned its value plus its value divided by 256.

The above may be expressed in pseudo code as follows:

$$UniNum = UniNum * (Inp[InpPos] + Out[OutPos]);$$

$$UniNum = UniNum + (UniNum / 256);$$

Then the output buffer Out is assigned at the position indicated by the output position pointer OutPos the sum of its value and the unique number variable UniNum:

$$Out[OutPos] = Out[OutPos] + UniNum;$$

Finally, the value of the input position pointer InpPos, the value of the output position pointer OutPos and the temporary variable i are incremented by one:

$$OutPos = OutPos + 1;$$

$$InPos = InPos + 1;$$

$$i = i + 1;$$

After these calculations are performed, the value of the output position pointer OutPos is compared S24 with the size of the output buffer Out. If the value of the output position pointer OutPos is equal or larger than the size of the output buffer Out the value of the output position pointer OutPos is set S25 to zero. Analogously, the value of the input position pointer InpPos is compared S26 with the size of the predefined password Inp. If the value of the input position pointer InpPos is equal or larger than the size of the predefined password Inp the value of the input position pointer InpPos is set S27 to zero.

If in step S22 the temporary variable i is larger than the loop counter LoCo, the method ends at step S28.

As a result of the method execution, a hash value will be provided in the output buffer Out.

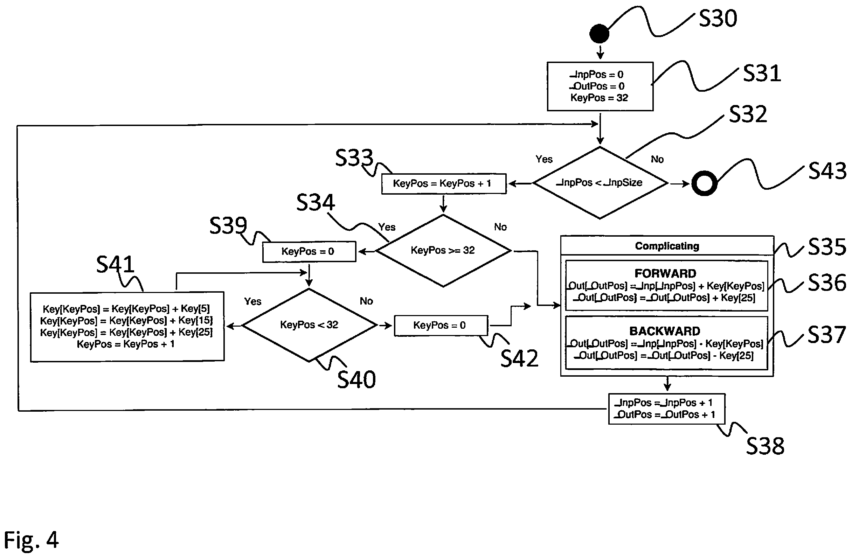

Fig. 4 shows a flow diagram of another computer implemented cryptographic method for encrypting and/or decrypting an input message _Inp in an electronic system 100 based on a predefined password Inp. The step of generating the hash "Key" based on the predefined password Inp is performed as shown in Figs. 2 and 3. The method shown in Fig. 4 explains how to use the hash value "Key" for encrypting and decrypting the input message _Inp.

The method starts in step S30 and initializes the _InpPos variable and the _OutPos variable with zero, and the KeyPos variable with 32. The value 32 refers to the size of the hash value "Key" and any other value could be used accordingly. _InpPos and _OutPos are both pointers to the elements of the input message _Inp and the output message _Out.

In Step S32 it is verified if the _InpPos pointer is smaller than the size of the input message _InpSize. If it was larger, the input message _Inp would be completely processed and the method would end in step S43.

If the _InpPos pointer is smaller than the size of the input message _InpSize in Step S33 the pointer KeyPos is incremented by 1. In Step S34 is it is verified if the pointer KeyPos is equal to or larger than 32. Again, the value 32 refers to the size of the hash value "Key" and any other value could be used accordingly. If the pointer KeyPos is smaller than 32 the pointer KeyPos is used in step S35 for encrypting or decrypting the input message _Inp.

If the input message is encrypted in step S36 the current element of the output message _Out[_OutPos] is assigned the sum of the current element of the input message _Inp[_InpPos] and the element of the hash value Key[KeyPos] that is indicated by the pointer KeyPos. Further, the value of the 25th element of the hash value Key[KeyPos] is added to the current element of the output message _Out[_OutPos].

If the input message is decrypted in step S37 the current element of the output message _Out[_OutPos] is assigned the difference of the current element of the input message _Inp[_InpPos] and the element of the hash value Key[KeyPos] that is indicated by the pointer KeyPos. Further, the value of the 25th element of the hash value Key[KeyPos] is subtracted from the current element of the output message _Out[_OutPos].

It is understood, that in both steps S36 and S27 the 25th element is just exemplarily chosen and that any other element could be chosen. Then the pointers _InpPos and _OutPos are both incremented by 1 in step S38. After step S38 the method returns to step S32 for the next iteration.

If in step S34 it is determined that the pointer KeyPos is equal to or larger than 32, the hash value "Key" is further obfuscated or obscured. In step S39 the pointer KeyPos is set to zero. In step S40 it is verified if the pointer KeyPos is smaller than 32. Again the number 32 refers to the size of the hash value "Key" and therefore other values may also be chosen.

If the pointer KeyPos is smaller than 32, in Step S41 the element of the hash value Key[KeyPos] indicated by the pointer KeyPos is summed with other elements of the hash value "Key". In the example of Fig. 4 the element of the hash value Key[KeyPos] is summed with the 5th, the 15th and 25th element of the hash value "Key". The 5th, the 15th and 25th are just exemplarily chosen and may also be chosen differently. Further, more or less than three elements may be summed to the respective element Key[KeyPos]. Finally, in step S41 the pointer KeyPos is incremented by 1. And the method returns to step S40.

If the pointer KeyPos is not smaller than 32, i.e. the complete hash value "Key" has ben obfuscated, the pointer KeyPos is set to 0 and step S35 is executed.

Fig. 5 shows a block diagram of an embodiment of a computer system 100. The computer system comprises a processor 101 that is configured to perform the method of the present invention. As options the computer system 100 further comprises an input interface 102, an output interface 103 and a memory 104.

The processor 101 may e.g. receive an input message _Inp and e.g. a predefined password via the input interface 102. Such an input interface 102 may e.g. be a user interface that allows a user to select the input message, e.g. a file, and inputting a password. The processor may then calculate the hash value "Key" for the predefined password Inp and the encrypted or decrypted message _Out and e.g. provide the encrypted or decrypted message _Out via the output interface 103. The memory may e.g. store instructions for the processor 101 that cause the processor 101 to perform the method of the present invention.

It is understood, that the computer system 100 of Fig. 1 may be any type of computer system, like e.g. a home computer, a server that is accessible via a data network, like the internet or the like.

Possible implementations of the computer system also include network enabled devices with low computational power, like e.g. Internet-of-Things devices. Such devices may e.g. include entertainment and household electronic devices, sensors and actuators, and the like.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a computer implemented cryptographic method for encrypting and/or decrypting an input message (_Inp) in an electronic system 100 based on a predefined password (Inp), the computer implemented cryptographic method comprising determining (S1) a hash value (Key) for the predefined password (Inp) based on a predefined hash algorithm, and encrypting (S2) or decrypting (S3) the input message (_Inp) based on integer overflows caused by computations over the input message (_Inp) and the determined hash value (Key), and providing the encrypted or decrypted input message (_Inp) in an output message (_Out). Further, the present invention provides a corresponding computer system and computer readable computer program product.

## List of reference signs

| | |
|---|---|
| Out, UniNum, InpPos, OutPos, LoCo | computation variable |
| Inp | predefined password |
| InpSize | predefined password size |
| OutSize | output buffer size |
| i | counter |
| _Inp | input message |
| _Out | output message |
| _InpSize | input message size |
| _InpPos, _OutPos, KeyPos | computation variable |
| Key | hash value |
| 100 | computer system |
| 101 | processor |
| 102 | input interface |
| 103 | output interface |
| 104 | memory |
| S1, S2 | method steps |
| S10 - S15 | method steps |
| S20 - S28 | method steps |
| S31 - S43 | method steps |

## Claims

1. Computer implemented cryptographic method for encrypting and/or decrypting an input message (_Inp) in an electronic system (100) based on a predefined password (Inp), the computer implemented cryptographic method comprising:

    determining (S1) a hash value (Key) for the predefined password (Inp) based on a predefined hash algorithm,
    encrypting (S2) or decrypting (S3) the input message (_Inp) based on integer overflows caused by computations over the input message (_Inp) and the determined hash value (Key), and
    providing (S4) the encrypted or decrypted input message (_Inp) in an output message (_Out),
    wherein determining (S1) a hash value (Key) comprises calculating a hash value (Key) with a predetermined length, especially 256 bit or 32 byte,
    wherein calculating a hash value (Key) comprises:

        preloading at least one computation variable (Out, UniNum, InPos, OutPos, LoCo) for the computation of the hash value (Key) based on a predefined arbitrary number; and
        calculating the hash value (Key) for the predefined password (Inp) based on integer overflows caused by computations over the predefined password (Inp) and the at least one preloaded computation variable (Out, UniNum, InPos, OutPos, LoCo),

wherein preloading comprises initializing a first element of an output buffer (Out) for the hash value (Key) with the predefined arbitrary number and initializing the further elements of the output buffer (Out) based on the value of the first element of the output buffer (Out) and initializing a unique number variable (UniNum) with a unique number,

wherein preloading comprises initializing an input position pointer (InpPos) with half the size of the predefined password (Inp) and initializing an output position pointer (OutPos) with half the size of the output buffer (Out) and initializing a loop counter (LoCo) with the summed value of the size of the predefined password (Inp) and size of the output buffer (Out) multiplied by a multiplication factor, and

wherein preloading comprises iterating over the output buffer (Out) starting with the second element of the output buffer (Out) and initializing in every iteration step the respective element of the output buffer (Out) based on the iteration step and the content of the element of the output buffer (Out) that is before the element of the output buffer (Out) treated in the respective iteration,

wherein calculating comprises performing calculations (S23) over the unique number variable (UniNum) and the predefined password (Inp) and the output buffer (Out) with themselves in a loop that is repeated a number of times as indicated by the loop counter (LoCo),

wherein performing calculations (S23) comprises assigning the unique number variable (UniNum) its value multiplied by the sum of the element of the predefined password (Inp) at the position indicated by the input position pointer (InpPos) and the element of the output buffer (Out) at the position indicated by the output position pointer (OutPos) and assigning the unique number variable (UniNum) its value plus its value divided by 256;

wherein performing calculations (S23) further comprises assigning the output buffer (Out) at the position indicated by the output position pointer (OutPos) the sum of its value and the unique number variable (UniNum); and

wherein performing calculations (S23) further comprises increasing the value of the input position pointer (InpPos) by one and increasing the value of the output position pointer (OutPos) by one.

2. Computer implemented cryptographic method according to claim 1, wherein calculating further comprises comparing (S24) the value of the output position pointer (OutPos) with the size of the output buffer (Out) and setting (S25) the value of the output position pointer (OutPos) to zero if the value of the output position pointer (OutPos) is equal to or larger than the size of the output buffer (Out),

wherein calculating further comprises comparing (S26) the value of the input position pointer (InpPos) with the size of the predefined password (Inp) and setting (S27) the value of the input position pointer (InpPos) to zero if the value of the input position pointer (InpPos) is equal to or larger than the size of the predefined password (Inp).

3. Computer implemented cryptographic method according to any one of the preceding claims, wherein encrypting (S2) or decrypting (S3) comprises initializing (S31) a second input position pointer (_InpPos) with zero and initializing a second output position pointer (_OutPos) with zero and initializing a key position pointer (KeyPos) with the size of the determined hash value (Key) for the predefined password.

4. Computer implemented cryptographic method according to claim 3, wherein encrypting (S2) or decrypting (S3) further comprises performing calculations (S35) with single elements of the input message (_Inp) and single elements of the determined hash value (Key) in a loop that is repeated for every element of the input message (_Inp) and comprises incrementing (S38) by one the second input position pointer (_InpPos) and the second output position pointer (_OutPos) after performing the calculations in every loop cycle,

especially wherein encrypting (S2) comprises assigning an element of the output message (_Out) that corresponds to the current loop cycle of the loop the sum of the corresponding element of the input and a corresponding element of the determined hash value (Key) that is indicated by the key position pointer (KeyPos), and adding a predefined element of the determined hash value (Key) to the respective element of the output message (_Out), and

especially wherein decrypting (S3) comprises assigning an element of the output message (_Out) that corresponds to the current loop cycle of the loop the difference of the corresponding element of the input and the corresponding element of the determined hash value (Key) that is indicated by the key position pointer (KeyPos), and subtracting the predefined element of the determined hash value (Key) from the respective element of the output message (_Out).

5. Computer implemented cryptographic method according to claim 4, wherein in every loop cycle if the second input position pointer (_InpPos) or the second output position pointer (_OutPos) is equal or larger than the size of the input message the method is terminated (S43).

**6.** Computer implemented cryptographic method according to any one of claims 4 and 5, wherein in every loop cycle if the second input position pointer (_InpPos) or the second output position pointer (_OutPos) is smaller than the size of the input message, the key position pointer (KeyPos) is determined by incrementing (S33) the key position pointer (KeyPos) by one and using the current key position pointer (KeyPos) if the key position pointer (KeyPos) is smaller (S34) than the number of elements of the hash value (Key).

**7.** Computer implemented cryptographic method according to claim 6, wherein if the key position pointer (KeyPos) is equal to or larger than the number of elements of the hash value (Key), the key position pointer (KeyPos) is set to zero (S39) and the determined hash value is modified (S41) by performing calculations over the determined hash value (Key) with itself.

**8.** Computer implemented cryptographic method according to claim 7, wherein performing calculations over the determined hash value (Key) with itself comprises iterating over all elements of the determined hash value (Key) and adding at least one, especially two or three, elements of the determined hash value (Key) to the respective element of the determined hash value (Key) of the respective iteration.

**9.** Computer system (100) comprising a processor (101) configured to perform a computer implemented method according to any one of preceding claims.

**10.** Computer readable computer program product comprising instructions that when executed by a processor (101) causes the processor to perform a computer implemented method according to any one of the preceding claims 1 to 8.

**Patentansprüche**

**1.** Computerimplementiertes kryptographisches Verfahren zum Verschlüsseln und/oder Entschlüsseln einer Eingangsnachricht (_Inp) in einem elektronischen System (100) basierend auf einem vordefinierten Passwort (Inp), wobei das computerimplementierte kryptographische Verfahren aufweist:

Bestimmen (S1) eines Hash-Wertes (Key) für das vordefinierte Passwort (Inp) basierend auf einem vordefinierten Hash-Algorithmus,
Verschlüsseln (S2) oder Entschlüsseln (S3) der Eingangsnachricht (_Inp) basierend auf Integer-Überläufen, die durch Berechnungen über die Eingangsnachricht (_Inp) und den bestimmten Hash-Wert (Key) verursacht werden, und
Bereitstellen (S4) der verschlüsselten oder entschlüsselten Eingangsnachricht (_Inp) in einer Ausgangsnachricht (_Out),
wobei das Bestimmen (S1) eines Hash-Wertes (Key) das Berechnen eines Hash-Wertes (Key) mit einer vorbestimmten Länge, insbesondere 256 Bit oder 32 Byte, aufweist,
wobei das Berechnen eines Hash-Wertes (Key) aufweist:

Vorladen mindestens einer Berechnungsvariablen (Out, UniNum, InPos, OutPos, OutPos, LoCo) zur Berechnung des Hash-Wertes (Key) basierend auf einer vorgegebenen beliebigen Zahl; und
Berechnen des Hash-Wertes (Key) für das vordefinierte Passwort (Inp) basierend auf Integer-Überläufen, die durch Berechnungen über das vordefinierte Passwort (Inp) und die mindestens eine vorgeladene Berechnungsvariable (Out, UniNum, InPos, OutPos, OutPos, LoCo) verursacht werden,
wobei das Vorladen das Initialisieren eines ersten Elements eines Ausgabepuffers (Out) für den Hash-Wert (Key) mit der vordefinierten beliebigen Zahl und das Initialisieren der weiteren Elemente des Ausgabepuffers (Out) basierend auf dem Wert des ersten Elements des Ausgabepuffers (Out) und das Initialisieren einer einzigartigen Zahlenvariablen (UniNum) mit einer eindeutigen Zahl aufweist,
wobei das Vorladen das Initialisieren eines Eingabepositionszeigers (InpPos) mit der Hälfte der Größe des vordefinierten Passworts (Inp) und das Initialisieren eines Ausgabepositionszeigers (OutPos) mit der Hälfte der Größe des Ausgabepuffers (Out) und das Initialisieren eines Schleifenzählers (LoCo) mit dem summierten Wert der Größe des vordefinierten Passworts (Inp) und der Größe des Ausgabepuffers (Out) multipliziert mit einem Multiplikationsfaktor aufweist, und
wobei das Vorladen aufweist, das Iterieren über den Ausgabepuffer (Out) beginnend mit dem zweiten Element des Ausgabepuffers (Out) und das Initialisieren des jeweiligen Elements des Ausgabepuffers (Out) in jedem Iterationsschritt basierend auf dem Iterationsschritt und dem Inhalt des Elements des Ausgabepuffers (Out), das vor dem Element des Ausgabepuffers (Out) liegt, das in der jeweiligen Iteration behandelt wird,

wobei das Berechnen das Durchführen von Berechnungen (S23) über der eindeutigen Zahlenvariable (UniNum) und dem vordefinierten Passwort (Inp) und dem Ausgabepuffer (Out) mit sich selbst in einer Schleife aufweist, die mehrmals wiederholt wird, wie durch den Schleifenzähler (LoCo) angezeigt,

wobei das Durchführen von Berechnungen (S23) aufweist das Zuweisen zur eindeutigen Zahlenvariablen (UniNum) ihres Wertes multipliziert mit der Summe des Elements des vordefinierten Passworts (Inp) an der durch den Eingabepositionszeiger (InpPos) angegebenen Position und des Elements des Ausgabepuffers (Out) an der durch den Ausgabepositionszeiger (OutPos) angegebenen Position und das Zuweisen zur eindeutigen Zahlenvariablen (UniNum) ihres Wertes plus ihren Wert durch 256 geteilt;

wobei das Durchführen von Berechnungen (S23) ferner aufweist das Zuordnen zum Ausgangspuffer (Out) an der durch den Ausgabepositionszeiger (OutPos) angezeigten Position, die Summe seines Wertes und der eindeutigen Zahlenvariablen (UniNum); und

wobei das Durchführen von Berechnungen (S23) ferner das Erhöhen des Wertes des Eingabepositionszeigers (InpPos) um eins und das Erhöhen des Wertes des Ausgabepositionszeiger s(OutPos) um eins aufweist.

2. Computerimplementiertes kryptographisches Verfahren nach Anspruch 1, wobei das Berechnen ferner das Vergleichen (S24) des Wertes des Ausgabepositionszeigers (OutPos) mit der Größe des Ausgangspuffers (Out) und das Setzen (S25) des Wertes des Ausgabepositionszeigers (OutPos) auf Null aufweist, wenn der Wert des Ausgabepositionszeigers (OutPos) gleich oder größer als die Größe des Ausgangspuffers (Out) ist, wobei das Berechnen ferner das Vergleichen (S26) des Wertes des Eingabepositionszeigers (InpPos) mit der Größe des vordefinierten Passworts (Inp) und das Einstellen (S27) des Wertes des Eingabepositionszeigers (InpPos) auf Null aufweist, wenn der Wert des Eingabepositionszeigers (InpPos) gleich oder größer als die Größe des vordefinierten Passworts (Inp) ist.

3. Computerimplementiertes kryptographisches Verfahren nach einem der vorhergehenden Ansprüche, wobei das Verschlüsseln (S2) oder Entschlüsseln (S3) das Initialisieren (S31) eines zweiten Eingabepositionszeigers (_InpPos) mit Null und das Initialisieren eines zweiten Ausgabepositionszeigers (_OutPos) mit Null und das Initialisieren eines Schlüsselpositionszeigers (KeyPos) mit der Größe des bestimmten Hash-Wertes (Key) für das vordefinierte Passwort aufweist.

4. Computerimplementiertes kryptographisches Verfahren nach Anspruch 3, wobei das Verschlüsseln (S2) oder Entschlüsseln (S3) ferner das Durchführen von Berechnungen (S35) mit einzelnen Elementen der Eingangsnachricht (_Inp) und einzelnen Elementen des bestimmten Hash-Wertes (Key) in einer Schleife aufweist, die für jedes Element der Eingangsnachricht (_Inp) wiederholt wird und das Inkrementieren (S38) des zweiten Eingabepositionszeigers (_InpPos) und des zweiten Ausgabepositionszeigers (_OutPos) um eins aufweist, nachdem die Berechnungen in jedem Schleifenzyklus durchgeführt wurden,

insbesondere wobei das Verschlüsseln (S2) das Zuweisen zu einem Element der Ausgangsnachricht (_Out), das dem aktuellen Schleifenzyklus der Schleife entspricht, der Summe des entsprechenden Elements der Eingabe und eines entsprechenden Elements des bestimmten Hash-Wertes (Key) aufweist, das durch den Schlüsselpositionszeiger (KeyPos) angezeigt wird, und das Addieren eines vordefinierten Elements des bestimmten Hash-Wertes (Key) zu dem jeweiligen Element der Ausgangsnachricht (_Out) aufweist, und

insbesondere wobei das Entschlüsseln (S3) das Zuweisen zu einem Element der Ausgangsnachricht (_Out), das dem aktuellen Schleifenzyklus der Schleife entspricht, der Differenz des entsprechenden Elements der Eingabe und des entsprechenden Elements des bestimmten Hash-Wertes (Key) aufweist, der durch den Schlüsselpositionszeiger (KeyPos) angezeigt wird, und das Subtrahieren des vordefinierten Elements des bestimmten Hash-Wertes (Key) von dem jeweiligen Element der Ausgangsnachricht (_Out) aufweist.

5. Computerimplementiertes kryptographisches Verfahren nach Anspruch 4, wobei in jedem Schleifenzyklus, wenn der zweite Eingabepositionszeiger (_InpPos) oder der zweite Ausgabepositionszeiger (_OutPos) gleich oder größer als die Größe der Eingangsnachricht ist, das Verfahren beendet wird (S43).

6. Computerimplementiertes kryptographisches Verfahren nach einem der Ansprüche 4 und 5, wobei in jedem Schleifenzyklus, wenn der zweite Eingabepositionszeiger (_InpPos) oder der zweite Ausgabepositionszeiger (_OutPos) kleiner als die Größe der Eingangsnachricht ist, der Schlüsselpositionszeiger (KeyPos) bestimmt wird, indem der Schlüsselpositionszeiger (KeyPos) um eins erhöht (S33) wird und der aktuelle Schlüsselpositionszeiger (KeyPos) verwendet wird, wenn der Schlüsselpositionszeiger (KeyPos) kleiner (S34) ist als die Anzahl der Elemente des Hash-Wertes (Key) ist.

**7.** Computerimplementiertes kryptographisches Verfahren nach Anspruch 6, wobei, wenn der Schlüsselpositionszeiger (KeyPos) gleich oder größer als die Anzahl der Elemente des Hash-Wertes (Key) ist, der Schlüsselpositionszeiger (KeyPos) auf Null (S39) gesetzt wird und der bestimmte Hash-Wert modifiziert wird (S41), indem Berechnungen über den bestimmten Hash-Wert (Key) mit sich selbst durchgeführt werden.

**8.** Computerimplementiertes kryptographisches Verfahren nach Anspruch 7, wobei das Durchführen von Berechnungen über den bestimmten Hash-Wert (Key) mit sich selbst das Iterieren über alle Elemente des bestimmten Hash-Wertes (Key) und das Hinzufügen von mindestens einem, insbesondere zwei oder drei, Elementen des bestimmten Hash-Wertes (Key) zu dem jeweiligen Element des bestimmten Hash-Wertes (Key) der jeweiligen Iteration aufweist.

**9.** Computersystem (100), aufweisend einen Prozessor (101), der konfiguriert ist, um ein computerimplementiertes Verfahren gemäß einem der vorhergehenden Ansprüche durchzuführen.

**10.** Computerlesbares Computerprogrammprodukt, aufweisend Anweisungen, die, wenn sie von einem Prozessor (101) ausgeführt werden, den Prozessor veranlassen, ein computerimplementiertes Verfahren nach einem der vorhergehenden Ansprüche 1 bis 8 durchzuführen.

**Revendications**

**1.** Procédé cryptographique mis en oeuvre par ordinateur pour crypter et/ou décrypter un message d'entrée (_Inp) dans un système électronique (100) basé sur un mot de passe prédéfini (Inp), le procédé cryptographique mis en oeuvre par ordinateur comprenant :

la détermination (S1) d'une valeur de hachage (Clé) pour le mot de passe prédéfini (Inp) sur la base d'un algorithme de hachage prédéfini,
le cryptage (S2) ou le décryptage (S3) du message d'entrée (_Inp) sur la base des débordements d'entiers causés par les calculs sur le message d'entrée (_Inp) et la valeur de hachage déterminée (Clé), et
fournir (S4) le message d'entrée chiffré ou déchiffré (_Inp) dans un message de sortie (_Out),
où la détermination (S1) d'une valeur de hachage (Clé) comprend le calcul d'une valeur de hachage (Clé) d'une longueur prédéterminée, en particulier 256 bits ou 32 octets,
où le calcul d'une valeur de hachage (Clé) comprend :

le préchargement d'au moins une variable de calcul (Out, UniNum, InPos, OutPos, LoCo) pour le calcul de la valeur de hachage (Clé) basée sur un nombre arbitraire prédéfini ; et
calcul de la valeur de hachage (Key) pour le mot de passe prédéfini (Inp) sur la base des dépassements d'entier causés par les calculs sur le mot de passe prédéfini (Inp) et sur au moins une variable de calcul préchargée (Out, UniNum, InPos, OutPos, LoCo),
dans lequel le préchargement comprend l'initialisation d'un premier élément d'un tampon de sortie (Out) pour la valeur de hachage (Key) avec le nombre arbitraire prédéfini et l'initialisation des autres éléments du tampon de sortie (Out) sur la base de la valeur du premier élément du tampon de sortie (Out) et l'initialisation d'une variable à nombre unique (UniNum) avec un nombre unique,
dans lequel le préchargement comprend l'initialisation d'un pointeur de position d'entrée (InpPos) avec la moitié de la taille du mot de passe prédéfini (Inp) et l'initialisation d'un pointeur de position de sortie (OutPos) avec la moitié de la taille du tampon de sortie (Out) et l'initialisation d'un compteur de boucle (LoCo) avec la valeur additionnée de la taille du mot de passe prédéfini (Inp) et de la taille du tampon de sortie (Out) multipliée par un facteur de multiplication, et
dans lequel le préchargement comprend l'itération sur le tampon de sortie (Out) en commençant par le deuxième élément du tampon de sortie (Out) et en initialisant dans chaque étape d'itération l'élément respectif du tampon de sortie (Out) sur la base de l'étape d'itération et du contenu de l'élément du tampon de sortie (Out) qui est avant l'élément du tampon de sortie (Out) traité dans l'itération respective,
où le calcul comprend l'exécution de calculs (S23) sur la variable de nombre unique (UniNum) et le mot de passe prédéfini (Inp) et le tampon de sortie (Out) avec eux-mêmes dans une boucle qui est répétée un certain nombre de fois comme indiqué par le compteur de boucle (LoCo),
dans lequel l'exécution de calculs (S23) comprend l'attribution à la variable de nombre unique (UniNum) de sa valeur multipliée par la somme de l'élément du mot de passe prédéfini (Inp) à la position indiquée par le pointeur de position d'entrée (InpPos) et de l'élément du tampon de sortie (Out) à la position indiquée par le pointeur de position de sortie (OutPos) et

l'attribution à la variable de nombre unique (UniNum) de sa valeur plus sa valeur divisée par 256 ;

dans lequel l'exécution de calculs (S23) comprend en outre l'attribution au tampon de sortie (Out) à la position indiquée par le pointeur de position de sortie (OutPos) de la somme de sa valeur et de la variable de nombre unique (UniNum) ; et

dans lequel l'exécution de calculs (S23) comprend en outre l'augmentation de la valeur du pointeur de position d'entrée (InpPos) de un et l'augmentation de la valeur du pointeur de position de sortie (OutPos) de un.

**2.** Procédé cryptographique mis en oeuvre par ordinateur selon la revendication 1, dans lequel le calcul comprend en outre la comparaison (S24) de la valeur du pointeur de position de sortie (OutPos) avec la taille du tampon de sortie (Out) et le réglage (S25) de la valeur du pointeur de position de sortie (OutPos) à zéro si la valeur du pointeur de position de sortie (OutPos) est égale ou supérieure à la taille du tampon de sortie (Out),

où le calcul comprend en outre la comparaison (S26) de la valeur du pointeur de position d'entrée (InpPos) avec la taille du mot de passe prédéfini (Inp) et la mise à zéro (S27) de la valeur du pointeur de position d'entrée (InpPos) si la valeur du pointeur de position d'entrée (InpPos) est égale ou supérieure à la taille du mot de passe prédéfini (Inp).

**3.** Procédé cryptographique mis en oeuvre par ordinateur selon l'une quelconque des revendications précédentes, dans lequel le cryptage (S2) ou le décryptage (S3) comprend l'initialisation (S31) d'un deuxième pointeur de position d'entrée (_InpPos) avec zéro et l'initialisation d'un deuxième pointeur de position de sortie (_OutPos) avec zéro et l'initialisation d'un pointeur de position de clé (KeyPos) avec la taille de la valeur de hachage déterminée (Key) pour le mot de passe prédéfini.

**4.** Procédé cryptographique mis en oeuvre par ordinateur selon la revendication 3, dans lequel le cryptage (S2) ou le décryptage (S3) comprend en outre l'exécution de calculs (S35) avec des éléments individuels du message d'entrée (_Inp) et des éléments individuels de la valeur de hachage déterminée (Clé) dans une boucle qui est répétée pour chaque élément du message d'entrée (_Inp) et comprend l'incrémentation (S38) d'un des deuxièmes pointeurs de position d'entrée (_InpPos) et des deuxièmes pointeurs de position de sortie (_OutPos) après avoir exécuté les calculs dans chaque cycle de boucle,

en particulier dans lequel le cryptage (S2) comprend l'attribution d'un élément du message de sortie (_Out) qui correspond au cycle de la boucle de courant de la boucle la somme de l'élément correspondant de l'entrée et d'un élément correspondant de la valeur de hachage déterminée (Key) qui est indiquée par le pointeur de position de la clé (KeyPos), et l'ajout d'un élément prédéfini de la valeur de hachage déterminée (Key) à l'élément respectif du message de sortie (_Out), et

en particulier dans lequel le décryptage (S3) comprend l'attribution à un élément du message de sortie (_Out) qui correspond au cycle de la boucle de courant de la différence entre l'élément correspondant de l'entrée et l'élément correspondant de la valeur de hachage déterminée (Key) qui est indiquée par le pointeur de position de la clé (KeyPos), et la soustraction de l'élément prédéfini de la valeur de hachage déterminée (Key) de l'élément respectif du message de sortie (_Out).

**5.** Procédé cryptographique mis en oeuvre par ordinateur selon la revendication 4, dans lequel à chaque cycle de boucle, si le deuxième pointeur de position d'entrée (_InpPos) ou le deuxième pointeur de position de sortie (_OutPos) est égal ou supérieur à la taille du message d'entrée, le procédé est terminé (S43).

**6.** Méthode cryptographique mise en oeuvre par ordinateur selon l'une quelconque des revendications 4 et 5, dans laquelle, à chaque cycle de boucle, si le deuxième pointeur de position d'entrée (_InpPos) ou le deuxième pointeur de position de sortie (_OutPos) est inférieur à la taille du message d'entrée, le pointeur de position clé (KeyPos) est déterminé en incrémentant (S33) le pointeur de position clé (KeyPos) de un et en utilisant le pointeur de position clé (KeyPos) actuel si le pointeur de position clé (KeyPos) est plus petit (S34) que le nombre d'éléments de la valeur de hachage (Key).

**7.** Procédé cryptographique mis en oeuvre par ordinateur selon la revendication 6, dans lequel si le pointeur de position de clé (KeyPos) est égal ou supérieur au nombre d'éléments de la valeur de hachage (Clé), le pointeur de position de clé (KeyPos) est mis à zéro (S39) et la valeur de hachage déterminée est modifiée (S41) en effectuant des calculs sur la valeur de hachage déterminée (Clé) avec elle-même.

**8.** Procédé cryptographique mis en oeuvre par ordinateur selon la revendication 7, dans lequel l'exécution de calculs sur la valeur de hachage déterminée (Clé) avec elle-même comprend l'itération sur tous les éléments de la valeur de hachage déterminée (Clé) et l'ajout d'au moins un, en particulier deux ou trois, éléments de la valeur de hachage déterminée (Clé) à l'élément respectif de la valeur de hachage déterminée (Clé) de l'itération respective.

9.  Système informatique (100) comprenant un processeur (101) configuré pour exécuter une méthode mise en oeuvre par ordinateur selon l'une quelconque des revendications précédentes.

10. Produit de programme informatique lisible par ordinateur comprenant des instructions qui, lorsqu'elles sont exécutées par un processeur (101), amènent le processeur à exécuter une méthode mise en oeuvre par ordinateur conformément à l'une quelconque des revendications précédentes 1 à 8.

Fig. 1

Fig. 2

Fig. 3

Fig. 4

EP 3 419 213 B1

Fig. 5

**REFERENCES CITED IN THE DESCRIPTION**

**Patent documents cited in the description**

- EP 1504337 B1
- US 2015082054 A1
- US 2014281574 A1
- WO 2006084375 A1
- WO 0221760 A1
- EP 0759669 A2

**Non-patent literature cited in the description**

- Handbook of applied cryptography
- **JIAN GUO.** *The PHOTON Family of Lightweight Hash Functions*
- Stream Ciphers. Handbook of applied cryptography